# EUROPEAN PATENT SPECIFICATION

(11) **EP 2 873 242 B1**
(45) Date of publication and mention of the grant of the patent: **21.10.2020**
(21) Application number: 13744989.8
(22) Date of filing: 09.07.2013
(51) Int. Cl.: H04N 13/128, H04N 13/302, H04N 13/332, H04N 13/368, H04N 13/371, H04N 13/373, H04N 13/239

(54) **STEREOSCOPIC PICTURES GENERATION**
ERZEUGUNG STEREOSKOPISCHER BILDER
GÉNÉRATION D'IMAGES STÉRÉOSCOPIQUES

(30) Priority: 12.07.2012 EP 12305843
(43) Date of publication of application: 20.05.2015
(73) Proprietor: Essilor International, 94220 Charenton-le-Pont (FR)
(72) Inventor: ROUSSEAU, Denis, F-94220 Charenton-le-Pont (FR)
(74) Representative: Cabinet Novitech
(86) International application number: PCT/EP2013/064505
(87) International publication number: WO 2014/009378

(56) References cited:
- EP-A1- 0 641 132
- WO-A1-2008/120125
- GB-A- 2 329 545
- JP-A- 7 129 095
- US-A- 5 175 616
- US-A1- 2004 233 275
- US-A1- 2006 119 572
- US-A1- 2008 024 597
- US-A1- 2010 007 582
- US-A1- 2011 304 616
- US-A1- 2012 169 838
- STEPTOE W ET AL: "Eye Tracking for Avatar Eye Gaze Control During Object-Focused Multiparty Interaction in Immersive Collaborative Virtual Environments", VIRTUAL REALITY CONFERENCE, 2009. VR 2009. IEEE, IEEE, PISCATAWAY, NJ, USA, 14 March 2009 (2009-03-14), pages 83-90, XP031465453, ISBN: 978-1-4244-3943-0
- ANONYMOUS: SPIE, PO BOX 10 BELLINGHAM WA 98227-0010, USA, 23 January 2011 (2011-01-23), XP040552890,

## Description

The invention relates to a generation of stereoscopic pictures.

The discussion of the background of the invention herein is included to explain the context of the invention. This is not to be taken as an admission that any of the material referred to was published, known or part of the common general knowledge at the priority date of any of the claims.

Stereoscopic pictures generating system may present the drawback of not being optimized for the user of said system.

Consequently, it can quickly give rise to the user suffering dizziness and nausea.

One object of the invention is to provide stereoscopic pictures generating system and method that do not present the drawbacks mentioned hereinabove.

Also, another object of the invention is to provide stereoscopic pictures generating system and method that enhance the realistic effect of 3D display.

In particular, one object of the invention is to provide stereoscopic pictures generating system and method enabling 3D information content to be viewed while limiting visual fatigue and discomfort for the user of said system. WO2008/120125, US5175616, US2006/119572 and US2012/169838 some prior art documents related to this issue.

To this end, the invention proposes a stereoscopic pictures generating method according to claim 1.

Thus, right and left stereoscopic pictures are generating based on at least one user related parameter so that said user views the information content under conditions that are best adapted to the user's physiology. Consequently, the physiological fatigue is minimized.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

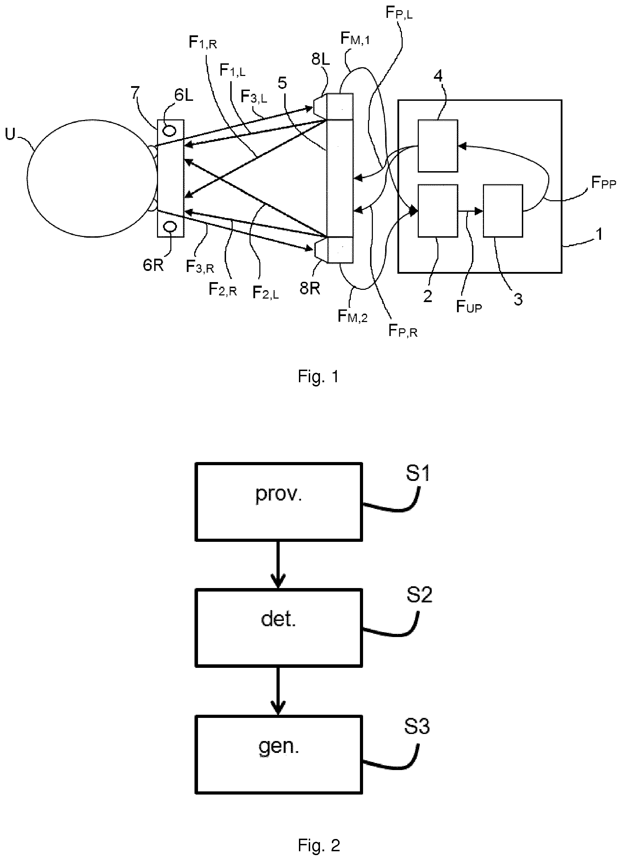

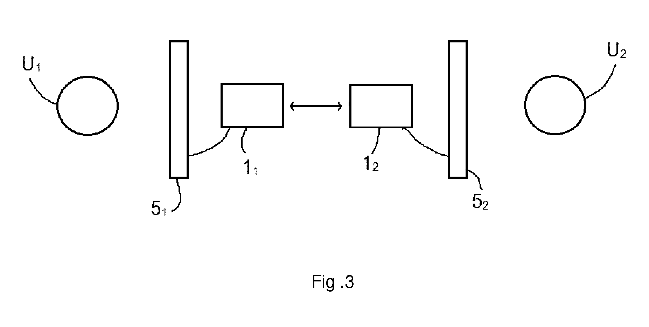

Non limiting embodiments of the invention will now be described with reference to the accompanying drawing wherein:
∘ Figure 1 is a schematic block diagram representing a user, a binocular viewing device, a screen, and a stereoscopic pictures generating system according to some embodiments of the invention,
∘ Figure 2 is a flow chart showing steps of a stereoscopic pictures generating method according to some embodiments of the invention, and
∘ Figure 3 is a schematic block diagram showing two users handling a videoconference using two stereoscopic pictures generating systems.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

Figure 1 shows a user U, a binocular viewing device 7, a screen 5, and a stereoscopic pictures generating system 1 according to some embodiments of the invention.

The screen 5 is designed to perform stereoscopic display, for example active stereoscopic display (shutter), passive stereoscopic display (polarization), autostereoscopic display, or other.

The system 1 comprises providing means 2 configured to provide at least one user related parameter.

For instance, the at least one user related parameter may comprise the interpupillary distance of the user U in close vision, in intermediary vision, or in far vision. The interpupillary distance is defined in the standard ISO 13666:1998.

According to some embodiments of the invention, the providing means 2 are configured to obtain the at least one user related parameter from a measurement.

The measurement may be performed by using right and left cameras 6_{L} and 6_{R} embedded in the binocular viewing device 7, which is designed to be worn by the user U. This measurement may thus be performed without the use of cameras embedded in the screen 5. The measurement is then transmitted from the binocular viewing device 7 to the providing means 2 by means of any type of connection, for example a wireless connection.

Alternatively, the measurement may be performed by using a camera 8_{L} or 8_{R} embedded in the screen 5 and two benchmarks provided on the binocular viewing device 7. Arrows F_{1,L} and F_{1,R} are symbolizing such a measurement performed by camera 8_{L}. Similarly, arrows F_{2,L} and F_{2,R} are symbolizing such a measurement performed by camera 8_{R}. This measurement may be performed with the use of a single camera embedded in the screen 5. The measurement is then transmitted from the screen 5 to the stereoscopic pictures generating system 1 by means of any type of connection, for example a wireless connection, as symbolized by arrows F_{M,1} and F_{M,2}.

Alternatively, the measurement may be performed by using two camera 8_{L} and 8_{R} embedded in the screen 5, as symbolized by arrows F_{3,L} and F_{3,R}. This measurement may be performed without the use of a binocular viewing device 7. The measurement is then transmitted from the screen 5 to the stereoscopic pictures generating system 1 by means of any type of connection, for example a wireless connection, as symbolized by arrows F_{M,1} and F_{M,2}.

The at least one user related parameter may further or instead comprise the distance between the user U and the screen 5 facing the user U, that is to say the image display distance. Such a measurement may be performed by using one or two camera(s) 8_{L}, 8_{R} embedded in the screen 5.

The measurement may be performed periodically, for instance during right and left videos generation. It is thus possible to obtain a current position of the user U, for instance when the user U is playing a videogame.

According to other embodiments of the invention, the providing means 2 are configured to obtain the at least one user related parameter from a device storing the user related parameter. The device storing the user related parameter may be embedded in the system 1 or may be a remote device configured to communicate with the system 1.

The system 1 further comprises determining means 3 configured to receive the at least one user related parameter, as symbolized by arrow F_{UP}, and to determine a pictures parameter based on the at least one user related parameter.

For instance, when two cameras 8_{L}, 8_{R} are embedded in the screen 5, the determining means 3 may be configured to determine a distance to be set between the two cameras 8_{L}, 8_{R}.

The determining means 3 may further or instead be configured to determine a display positioning of a right picture on the screen 5 and a display positioning of a left picture on the screen 5.

The system 1 further comprises generating means 4 configured to receive the pictures parameter, as symbolized by arrow F_{PP}, and to generate right and left stereoscopic pictures based on the pictures parameter.

For instance, when the generating means 4 are configured to generate the right and left pictures based on a determined right and left display positioning, the right and left pictures may be generated by setting picture margins based on the determined right and left display positioning.

When the generating means 4 are configured to generate the right and left pictures based on a distance to be set between the two cameras 8_{L}, 8_{R}, the generating means 4 may transmit a command signal to the screen 5 to set the positions of the two cameras 8_{L}, 8_{R}.

Then, the generated right and left stereoscopic pictures are displayed on a screen.

In some embodiments of the invention, the screen displaying the right and left pictures is the screen 5 facing the user U associated to the user related parameter. In these embodiments of the invention, the generated pictures are transmitted from the generating means 4 to the screen 5, as symbolized by arrows F_{P,L} and F_{P,R}. The display may thus be set as a function of the morphology of the user U, for example when the user U is playing a videogame or watching a movie.

According to other embodiments of the invention, the screen displaying the right and left pictures is a second screen facing a second user. The pictures generation may thus be adapted as a function of a second user, for example when the user U and the second user are handling a videoconference.

According to an embodiment of the invention illustrated on figure 2, the stereoscopic pictures generating method according to the invention comprises:
- a providing step S1,
- a determining step S2, and
- a generating step S3.

The stereoscopic pictures generating method may be implemented by the stereoscopic pictures generating system 1 disclosed above.

During the providing step S1 at least one user related parameter is provided.

The providing step S1 may comprise a measurement operation during which the user related parameter is measured, or an obtaining operation during which the at least one user related parameter is obtained from a device storing the user related parameter.

For instance, the user related parameter is measured during a first implementation of the method and then is stored to be reused.

During the determining step S2 a pictures parameter is determined based on the at least one user related parameter provided in step S1.

The pictures parameter may comprise, for instance, a distance to be set between two cameras 8_{L} and 8_{R} embedded in the screen 5, and/or a display positioning of the right picture on the screen 5 and a display positioning of the left picture on the screen 5.

During the generating step S3 right and left stereoscopic pictures are generating based on the pictures parameter.

Then, the right and left stereoscopic pictures are transmitted to a screen to be displayed.

Figure 3 represents an example embodiment where a first user U₁ and a second user U₂ are handling a videoconference.

The first user U₁ is facing a first screen 5₁ and the second user U₂ is facing a second screen 5₂. A first stereoscopic pictures generating system 1₁ is connected to the first screen 5₁. A second stereoscopic pictures generating system 1₂ is connected to the second screen 5₂. The connections may be wireless connections. The first stereoscopic pictures generating system 1₁ and the second stereoscopic pictures generating system 1₂ are configured to communicate with one another, for instance by using the Internet.

The right and left videos showing the first user U₁, called first right and left videos, are provided from right and left cameras embedded in the first screen 5₁. The right and left videos showing the second user U₂, called second right and left videos, are provided from right and left cameras embedded in the second screen 5₂. The first right and left videos are thus displayed on the second screen 5₂ while the second right and left videos are displayed and the first screen 5₁.

In this example embodiment, the providing step S1 comprises a first providing operation during which at least one first user U₁ related parameter is provided. The first user related parameter comprises the interpupillary distance of the first user U₁ in close vision, in intermediary vision, or in far vision. The first providing operation may be performed by the providing means of the first stereoscopic pictures generating system 1₁.

Moreover, the providing step S1 comprises a second providing operation during which at least one second user U₂ related parameter is provided. The second user related parameter comprises the interpupillary distance of the second user U₂ in close vision, in intermediary vision, or in far vision. The second providing operation may be performed by the providing means of the second stereoscopic pictures generating system 1₂.

The determining step S2 comprises a first determining operation during which a first pictures parameter is determined based on the first user related parameter. The first picture parameter comprises a first distance to be set between the two cameras embedded in the second screen 5₂. The first determining operation may be performed by the determining means of the first stereoscopic pictures generating system 1₁. In that case the first pictures parameter is then transmitted to the second stereoscopic pictures generating system 1₂. Alternatively, the first user related parameter may be transmitted to the second stereoscopic pictures generating system 1₂ and the first determining operation may be performed by the determining means of the second stereoscopic pictures generating system 1₂.

Moreover, the determining step S2 comprises a second determining operation during which a second pictures parameter is determined based on the second user related parameter. The second picture parameter comprises a second distance to be set between the two cameras embedded in the first screen 5₁. The second determining operation may be performed by the determining means of the second stereoscopic pictures generating system 1₂. In that case the second pictures parameter is then transmitted to the first stereoscopic pictures generating system 1₁. Alternatively, the second user related parameter may be transmitted to the first stereoscopic pictures generating system 1₁ and the second determining operation may be performed by the determining means of the first stereoscopic pictures generating system 1₁.

The generating step S3 comprises a first generating operation during which first right and left stereoscopic pictures are generating. The first right and left pictures are provided from the two cameras embedded in the first screen 5₁, the distance between the two cameras being set according to the second pictures parameter. The first generating operation may be performed by the generating means of the first stereoscopic pictures generating system 1₁. The first right and left pictures are then transmitted to the second screen 5₂, and displayed on the second screen 5₂. As the distance between the two cameras embedded in the first screen 5₁ has been set as a function of the interpupillary distance of the second user U₂, the first right and left pictures are specifically adapted to the second user.

Moreover, the generating step S3 comprises a second generating operation during which second right and left stereoscopic pictures are generating. The second right and left pictures are provided from the two cameras embedded in the second screen 5₂, the distance between the two cameras being set according to the first pictures parameter. The second generating operation may be performed by the generating means of the second stereoscopic pictures generating system 1₂. The second right and left pictures are then transmitted to the first screen 5₁, and displayed on the first screen 5₁. As the distance between the two cameras embedded in the second screen 5₂ has been set as a function of the interpupillary distance of the first user U₁, the first right and left pictures are specifically adapted to the first user.

The invention has been described above with the aid of embodiments without limitation of the general inventive concept, the scope of the claims being defined by the appended claims.

## Claims

1. A stereoscopic pictures generating method comprising:
- a providing step comprising:
∘ a first providing operation during which at least one first user related parameter is provided, and
∘ a second providing operation during which at least one second user related parameter is provided,
- a determining step comprising:
∘ a first determining operation during which a first picture parameter is determined based on the first user related parameter, the first picture parameter comprising a first distance to be set between two cameras embedded in a screen facing the second user, and
∘ a second determining operation during which a second picture parameter is determined based on the second user related parameter, the second picture parameter comprising a second distance to be set between two cameras embedded in a screen facing the first user, and
- a generating step comprising:
∘ a first generating operation during which right and left stereoscopic pictures are generated based on the first picture parameter, the right and left stereoscopic pictures being to be displayed on the screen facing the first user, and
∘ a second generating operation during which right and left stereoscopic pictures are generated based on the second picture parameter, the right and left stereoscopic pictures being to be displayed on the screen facing the second user,
wherein the first and second user related parameters comprise the interpupillary distance of the corresponding user in close vision, in intermediary vision, or in far vision, and
the first and second user related parameters comprise the distance between the corresponding user and the screen.

2. The stereoscopic pictures generating method according to claim 1, wherein each screen is designed to display right and left videos, each video comprising a set of pictures, the providing step being repeated several times during right and left videos generation.

3. The stereoscopic pictures generating method according to one of claims 1 or 2, wherein the providing step comprises an obtaining operation during which each user related parameter is obtained from a device storing the user related parameter.

4. The stereoscopic pictures generating method according to one of claims 1 or 2, wherein the providing step comprises a measurement operation during which each user related parameter is measured.

5. The stereoscopic pictures generating method according to claim 4, wherein the measurement operation is performed by using right and left cameras embedded in binocular viewing devices respectively designed to be worn by the users.

6. The stereoscopic pictures generating method according to claim 4, wherein the measurement operation is performed by using at least a camera embedded in each screen.

7. The stereoscopic pictures generating method according to one of claims 1 to 6, wherein each pictures parameter comprises a display positioning of the right picture on the corresponding screen and a display positioning of the left picture on the corresponding screen.

8. A computer program product comprising one or more stored sequences of instructions that are accessible to a processor and which, when executed by the processor, causes the processor to carry out the steps of any of claims 1 to 7.

9. A computer readable medium carrying one or more sequences of instructions of the computer program product of claim 8.

10. A stereoscopic pictures generating system comprising:
- a first screen facing a first user and a second screen facing a second user,
- providing means configured to provide at least one first user related parameter,
- providing means configured to provide at least one second user related parameter,
- determining means configured to determine a first picture parameter based on the at least one first user related parameter, the first picture parameter comprising a first distance to be set between two cameras embedded in a screen facing the second user,
- determining means configured to determine a second picture parameter based on the at least second user related parameter, the second picture parameter comprising a second distance to be set between two cameras embedded in the screen facing the first user,
- generating means configured to generate right and left stereoscopic pictures based on the first picture parameter, the right and left stereoscopic pictures being to be displayed on Z the screen facing the first user,
- generating means configured to generate right and left stereoscopic pictures based on the second picture parameter, the right and left stereoscopic pictures being to be displayed on the screen facing the second user, and
wherein the first and the second user related parameters comprise the interpupillary distance of the corresponding user in close vision, in intermediary vision, or in far vision, and the first and second user related parameters comprise the distance between the corresponding user and the screen.

## Patentansprüche

1. Stereoskopbilder-Erzeugungsverfahren, das Folgendes umfasst:
- einen Bereitstellungsschritt, der Folgendes umfasst:
∘ eine erste Bereitstellungsoperation, während der mindestens ein einem ersten Benutzer zugehöriger Parameter bereitgestellt wird, und
∘ eine zweite Bereitstellungsoperation, während der mindestens ein einem zweiten Benutzer zugehöriger Parameter bereitgestellt wird,
- einen Bestimmungsschritt, der Folgendes umfasst:
∘ eine erste Bestimmungsoperation, während der ein erster Bildparameter auf Basis des dem ersten Benutzer zugehörigen Parameters bestimmt wird, wobei der erste Bildparameter eine erste Distanz umfasst, die zwischen zwei Kameras eingestellt werden soll, die in einen dem zweiten Benutzer zugewandten Bildschirm eingebettet sind, und
∘ eine zweite Bestimmungsoperation, während der ein zweiter Bildparameter auf Basis des dem zweiten Benutzer zugehörigen Parameters bestimmt wird, wobei der zweite Bildparameter eine zweite Distanz umfasst, die zwischen zwei Kameras eingestellt werden soll, die in einen dem erster Benutzer zugewandten Bildschirm eingebettet sind, und
- einen Erzeugungsschritt, der Folgendes umfasst:
∘ eine erste Erzeugungsoperation, während der ein rechtes und linkes Stereoskopbild auf Basis des ersten Bildparameters generiert werden, wobei das rechte und linke Stereoskopbild auf dem dem ersten Benutzer zugewandten Bildschirm angezeigt werden sollen, und
∘ eine zweite Erzeugungsoperation, während der ein rechtes und linkes Stereoskopbild auf Basis des zweiten Bildparameters generiert werden, wobei das rechte und linke Stereoskopbild auf dem dem zweiten Benutzer zugewandten Bildschirm angezeigt werden sollen,
wobei der dem ersten und der dem zweiten Benutzer zugehörige Parameter die Pupillendistanz des entsprechenden Benutzers bei Nahesehen, bei Zwischensehen oder bei Weitsehen umfassen, und
der dem ersten und der dem zweiten Benutzer zugehörige Parameter die Distanz zwischen dem entsprechenden Benutzer und dem Bildschirm umfassen.

2. Stereoskopbilder-Erzeugungsverfahren nach Anspruch 1, wobei jeder Bildschirm dazu gestaltet ist, rechte und linke Videos anzuzeigen, wobei jedes Video eine Menge von Bildern umfasst, wobei der Bereitstellungsschritt während der Erzeugung von rechten und linken Videos mehrmals wiederholt wird.

3. Stereoskopbilder-Erzeugungsverfahren nach einem der Ansprüche 1 oder 2, wobei der Bereitstellungsschritt eine Erhalteoperation umfasst, während der jeder einem Benutzer zugehörige Parameter von einer Vorrichtung erhalten wird, die den einem Benutzer zugehörigen Parameter speichert.

4. Stereoskopbilder-Erzeugungsverfahren nach einem der Ansprüche 1 oder 2, wobei der Bereitstellungsschritt eine Messoperation umfasst, während der jeder einem Benutzer zugehörige Parameter gemessen wird.

5. Stereoskopbilder-Erzeugungsverfahren nach Anspruch 4, wobei die Messoperation unter Verwendung von rechten und linken Kameras durchgeführt wird, die in binokularen Betrachtungsvorrichtungen eingebettet sind, die jeweils dafür gestaltet sind, von den Benutzern getragen zu werden.

6. Stereoskopbilder-Erzeugungsverfahren nach Anspruch 4, wobei die Messoperation durch Verwenden mindestens einer in jedem Bildschirm eingebetteten Kamera durchgeführt wird.

7. Stereoskopbilder-Erzeugungsverfahren nach einem der Ansprüche 1 bis 6, wobei jeder Bilderparameter eine Anzeigepositionierung des rechten Bilds auf dem entsprechenden Bildschirm und eine Anzeigepositionierung des linken Bilds auf dem entsprechenden Bildschirm umfasst.

8. Computerprogrammprodukt, das eine oder mehrere gespeicherte Sequenzen von Anweisungen umfasst, die für einen Prozessor zugänglich sind und die bei Ausführung durch den Prozessor bewirken, dass der Prozessor die Schritte nach einem der Ansprüche 1 bis 7 ausführt.

9. Computerlesbares Medium, das eine oder mehrere Sequenzen von Anweisungen des Computerprogrammprodukts nach Anspruch 8 trägt.

10. Stereoskopbilder-Erzeugungssystem, das Folgendes umfasst:
- einen ersten Bildschirm, der einem ersten Benutzer und einem zweiten Benutzer zugewandt ist,
- Bereitstellungsmittel, die zum Bereitstellen mindestens eines dem ersten Benutzer zugehörigen Parameters ausgebildet sind,
- Bereitstellungsmittel, die zum Bereitstellen mindestens eines dem zweiten Benutzer zugehörigen Parameters ausgebildet sind,
- Bestimmungsmittel, die zum Bestimmen eines ersten Bildparameters auf Basis des mindestens einen dem ersten Benutzer zugehörigen Parameters ausgebildet sind, wobei der erste Bildparameter eine erste Distanz umfasst, die zwischen zwei Kameras eingestellt werden soll, die in einen dem zweiten Benutzer zugewandten Bildschirm eingebettet sind, und
- Bestimmungsmittel, die zum Bestimmen eines zweiten Bildparameters auf Basis des mindestens einen dem zweiten Benutzer zugehörigen Parameters ausgebildet sind, wobei der zweite Bildparameter eine zweite Distanz umfasst, die zwischen zwei Kameras eingestellt werden soll, die in dem dem ersten Benutzer zugewandten Bildschirm eingebettet sind,
- Erzeugungsmittel, die zum Erzeugen rechter und linker Stereoskopbilder auf Basis des ersten Bildparameters ausgebildet sind, wobei die rechten und linken Stereoskopbilder auf dem dem ersten Benutzer zugewandten Bildschirm angezeigt werden sollen,
- Erzeugungsmittel, die zum Erzeugen rechter und linker Stereoskopbilder auf Basis des zweiten Bildparameters ausgebildet sind, wobei die rechten und linken Stereoskopbilder auf dem dem zweiten Benutzer zugewandten Bildschirm angezeigt werden sollen,
wobei der dem ersten und der dem zweiten Benutzer zugehörige Parameter die Pupillendistanz des entsprechenden Benutzers bei Nahesehen, bei Zwischensehen oder bei Weitsehen umfassen, und der dem ersten und der dem zweiten Benutzer zugehörige Parameter die Distanz zwischen dem entsprechenden Benutzer und dem Bildschirm umfassen.

## Revendications

1. Procédé de génération d'images stéréoscopiques comprenant :
- une étape d'obtention comprenant :
∘ une première opération d'obtention pendant laquelle au moins un paramètre associé à un premier utilisateur est obtenu, et
∘ une deuxième opération d'obtention pendant laquelle au moins un paramètre associé à un deuxième utilisateur est obtenu,
- une étape de détermination comprenant :
∘ une première opération de détermination pendant laquelle un premier paramètre d'image est déterminé sur la base du paramètre associé au premier utilisateur, le premier paramètre d'image comprenant une première distance devant être réglée entre deux caméras incorporées dans un écran faisant face au deuxième utilisateur, et
∘ une deuxième opération de détermination pendant laquelle un deuxième paramètre d'image est déterminé sur la base du paramètre associé au deuxième utilisateur, le deuxième paramètre d'image comprenant une deuxième distance devant être réglée entre deux caméras incorporées dans un écran faisant face au premier utilisateur, et
- une étape de génération comprenant :
∘ une première opération de génération pendant laquelle des images stéréoscopiques droite et gauche sont générées sur la base du premier paramètre d'image, les images stéréoscopiques droite et gauche devant être affichées sur l'écran faisant face au premier utilisateur, et
∘ une deuxième opération de génération pendant laquelle des images stéréoscopiques droite et gauche sont générées sur la base du deuxième paramètre d'image, les images stéréoscopiques droite et gauche devant être affichées sur l'écran faisant face au deuxième utilisateur,
dans lequel les paramètres associés au premier et au deuxième utilisateur comprennent la distance interpupillaire de l'utilisateur correspondant en vision de près, en vision intermédiaire, ou en vision de loin, et
les paramètres associés au premier et au deuxième utilisateur comprennent la distance entre l'utilisateur correspondant et l'écran.

2. Procédé de génération d'images stéréoscopiques selon la revendication 1, dans lequel chaque écran est conçu pour afficher des vidéos droite et gauche, chaque vidéo comprenant un ensemble d'images, l'étape d'obtention étant répétée plusieurs fois pendant la génération de vidéos droite et gauche.

3. Procédé de génération d'images stéréoscopiques selon une des revendications 1 et 2, dans lequel l'étape d'obtention comprend une opération d'obtention pendant laquelle chaque paramètre associé à un utilisateur est obtenu à partir d'un dispositif stockant le paramètre associé à l'utilisateur.

4. Procédé de génération d'images stéréoscopiques selon une des revendications 1 et 2, dans lequel l'étape d'obtention comprend une opération de mesure pendant laquelle chaque paramètre associé à un utilisateur est mesuré.

5. Procédé de génération d'images stéréoscopiques selon la revendication 4, dans lequel l'opération de mesure est effectuée au moyen de caméras droite et gauche incorporées dans des dispositifs de vision binoculaire respectivement conçus pour être portés par les utilisateurs.

6. Procédé de génération d'images stéréoscopiques selon la revendication 4, dans lequel l'opération de mesure est effectuée au moyen d'au moins une caméra incorporée dans chaque écran.

7. Procédé de génération d'images stéréoscopiques selon une des revendications 1 à 6, dans lequel chaque paramètre d'image comprend un positionnement d'affichage de l'image droite sur l'écran correspondant et une position d'affichage de l'image gauche sur l'écran correspondant.

8. Produit-programme informatique comprenant une ou plusieurs séquences d'instructions stockées qui sont accessibles à un processeur et qui, lorsqu'elles sont exécutées par le processeur, conduisent le processeur à réaliser les étapes de l'une quelconque des revendications 1 à 7.

9. Support lisible par ordinateur portant une ou plusieurs séquences d'instructions du produit-programme informatique de la revendication 8.

10. Système de génération d'images stéréoscopiques comprenant :
- un premier écran faisant face à un premier utilisateur et un deuxième écran faisant face à un deuxième utilisateur,
- des moyens d'obtention configurés pour obtenir au moins un paramètre associé à un premier utilisateur,
- des moyens d'obtention configurés pour obtenir au moins un paramètre associé à un deuxième utilisateur,
- des moyens de détermination configurés pour déterminer un premier paramètre d'image sur la base de l'au moins un paramètre associé au premier utilisateur, le premier paramètre d'image comprenant une première distance devant être réglée entre deux caméras incorporées dans un écran faisant face au deuxième utilisateur,
- des moyens de détermination configurés pour déterminer un deuxième paramètre d'image sur la base de l'au moins un paramètre associé au deuxième utilisateur, le deuxième paramètre d'image comprenant une deuxième distance devant être réglée entre deux caméras incorporées dans l'écran faisant face au premier utilisateur,
- des moyens de génération configurés pour générer des images stéréoscopiques droite et gauche sur la base du premier paramètre d'image, les images stéréoscopiques droite et gauche devant être affichées sur l'écran faisant face au premier utilisateur,
- des moyens de génération configurés pour générer des images stéréoscopiques droite et gauche sur la base du deuxième paramètre d'image, les images stéréoscopiques droite et gauche devant être affichées sur l'écran faisant face au deuxième utilisateur, et dans lequel les paramètres associés au premier et au deuxième utilisateur comprennent la distance interpupillaire de l'utilisateur correspondant en vision de près, en vision intermédiaire, ou en vision de loin, et les paramètres associés au premier et au deuxième utilisateur comprennent la distance entre l'utilisateur correspondant et l'écran.
